# EUROPEAN PATENT SPECIFICATION

(11) **EP 0 272 145 B1**
(45) Date of publication and mention of the grant of the patent: **03.03.1993**
(21) Application number: 87311202.3
(22) Date of filing: 18.12.1987
(51) Int. Cl.: H01Q 9/04, H01Q 1/24, H01Q 13/10

(54) **Card-type radio receiver having slot antenna integrated with housing thereof**
Funkempfänger vom Kartentyp mit eingebauter Schlitzantenne
Récepteur radio, de type carte, muni d'une antenne fente intégrée

(30) Priority: 19.12.1986 JP 303398/86
(43) Date of publication of application: 22.06.1988
(73) Proprietor: NEC CORPORATION, Tokyo (JP)
(72) Inventor: Mori, Toshihiro c/o NEC Corporation, Minato-ku Tokyo (JP); Tsunoda, Kazuyuki c/o NEC Corporation, Minato-ku Tokyo (JP); Yamashita, Masayoshi c/o NEC Saitama Ltd., Kamikawamura Kodama-gun Saitama (JP)
(74) Representative: Orchard, Oliver John

(56) References cited:
- EP-A- 0 176 311
- GB-A- 2 101 436
- US-A- 3 736 591
- US-A- 4 123 756
- PATENT ABSTRACTS OF JAPAN, vol. 6, no. 189 (E-133)[1067], 28th September 1982; & JP-A-57 103 406 (NIPPON DENSHIN DENWA KOSHA) 28-06-1982

## Description

### BACKGROUND OF THE INVENTION

The present invention relates to a miniature radio receiver and, more particularly, to a miniature radio receiver having an antenna which is integrated with the housing thereof.

An antenna of the type constituting a part of the housing of a radio receiver is disclosed in, for example, U.S. Patent 3,736,591 to Rennels et al issued May 29, 1973. The antenna disclosed in this patent is constructed to serve as a loop antenna. The radiation principle of a loop antenna is as follows (the radiation principle is reversible for reception). The electric field extending from a loop antenna to a location which is remote from the antenna by a given distance is defined by the combination of two different electric fields: one derived from a difference in phase between radiation currents flowing through two conductive arms of a U-shaped member, and the other derived from a radiation current flowing through a conductive connecting portion of the U-shaped member. Hence, as the length of the connecting portion is reduced, i.e., as the thickness of the housing is reduced, the radiation currents through the two arms approach opposite phases to each other while, at the same time, the radiation current through the connecting portion is reduced, preventing a desired antenna gain from being attained. For this reason, the receiver structure shown and described in the above patent is not applicable to a receiver whose thickness is less than 5 millimeters, i.e. a so-called card-type receiver.

Japanese Laid-Open Patent Publication (Kokai) No. 57-103406/1982 (published June 28, 1982) teaches a portable radio apparatus in which a conductive plate is provided on the outer periphery of the housing thereof to serve as a slit or slot antenna. A problem with this kind of radio apparatus is that the slot antenna mounted on the outer periphery of the apparatus prevents the apparatus from being reduced in thickness.

European Patent Application no. 0 176 311 describes an antenna comprising a dielectric substrate, a radiation plate provided on one surface of the dielectric substrate and a ground plate provided on the other surface of the dielectric substrate. A short-circuit element may connect one end of the radiation and ground plates.

A feature of an embodiment to be described is the provision of a miniature radio receiver having an antenna which is suitable for a thin receiver configuration.

Another feature of the embodiment is the provision of a miniature radio receiver having a slot or slit antenna which is integrated with the housing thereof.

A further feature of an embodiment to be described is the provision of a miniature radio receiver which allows a minimum of decrease in loss resistance and Q to occur despite a thin design and, yet, has an efficient slit or slot antenna.

Yet another feature of an embodiment of a miniature receiver to be described is an antenna integrated with the housing thereof, which antenna has three-dimensional directivity.

In summary, an embodiment of a miniature receiver to be described includes a metal plate which forms a part of the housing of the receiver. A conductive plate which is smaller in width than the metal plate is located to face the metal plate. A connecting plate provides electrical connection between the metal plate and the conductive plate. The circuit parts of the receiver are mounted on that portion of the metal plate facing but not covered by the conductive plate. A cover made of an insulating material is fastened to the metal plate in such a manner as to cover the conductive plate and circuit parts. A radio frequency circuit is connected to the conductive plate with respect to high frequency. A metal plate, conductive plate and connecting plate cooperate to constitute a slot or slit antenna.

Embodiments of the invention will now be described, by way of example, with reference to the accompanying drawings in which:
Fig. 1 is an exploded prespective view of a card-type radio receiver embodying the present invention;
Figs. 2A to 2E are views each showing an antenna of Fig. 1 as viewed in a different direction;
Figs. 3A and 3B are fragmentary views showing another specific construction of a connecting plate of the receiver as shown in Figs. 2A to 2E;
Figs. 4A and 4B are schematic views useful for explaining the present invention; and
Figs. 5A to 5C are views each showing another embodiment of the present invention;

### DETAILED DESCRIPTION OF THE PREFERRED EMBODIMENTS

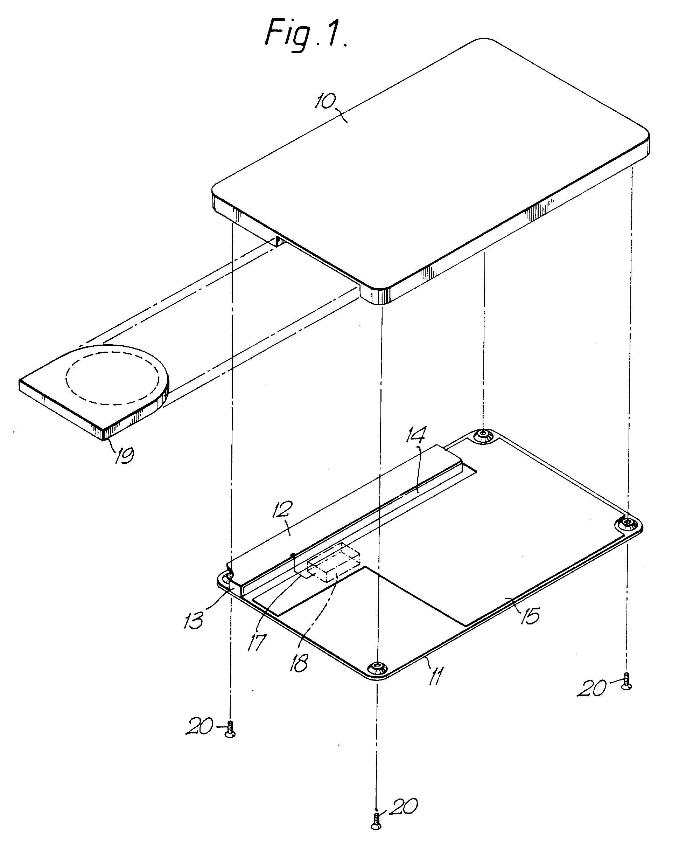

Referring to Fig. 1, a radio receiver embodying the present invention includes a metal plate 11 on which a printed circuit board 15 and a conductive plate 12 are mounted. While dressing paint or the like may be applied to the outer surface of the metal plate 11, the plate 11 itself constitutes a part of the housing of the receiver. Provided on the printed circuit board 15 are those circuits, not shown, which are necessary for paging. The printed circuit board 15 is so located as not to overlap that area in which the metal plate 11 and the conductive plate 12 face each other. A dielectric 14 having a small loss is interposed between the conductive plate 12 and the metal plate 11. As shown in the figure, the conductive plate 12 has a smaller width than the metal plate 11.

One end of the conductive plate 12 is mechanically and electrically connected to the metal plate 11 by a conductive connecting plate 13. In this configuration, the metal plate 11, conductive plate 12 and connecting plate 13 cooperate to form a substantially U-shaped slot or slit antenna. To finely tune the slot antenna to a desired frequency, a capacitor is connected between the other end of the conductive plate 12 and ground, as described in detail later.

A radio signal picked up by the antenna is fed to a high frequency amplifier section 18 through a feeder 17. The output of the amplifier section 18 is applied to the following circuit (not shown).

A cover 10 made of an insulating material has a volume great enough to accommodate various elements which are mounted on the metal plate 11. The cover 10 is fastened to the metal plate 11 with screws 20. The reference numeral 19 designates a battery case which may be inserted through a side wall of the cover 10. Although not shown in the figure, the cover 10 is provided with apertures for mounting a speaker grill, light-emitting diodes (LEDs), switches and others through side walls thereof.

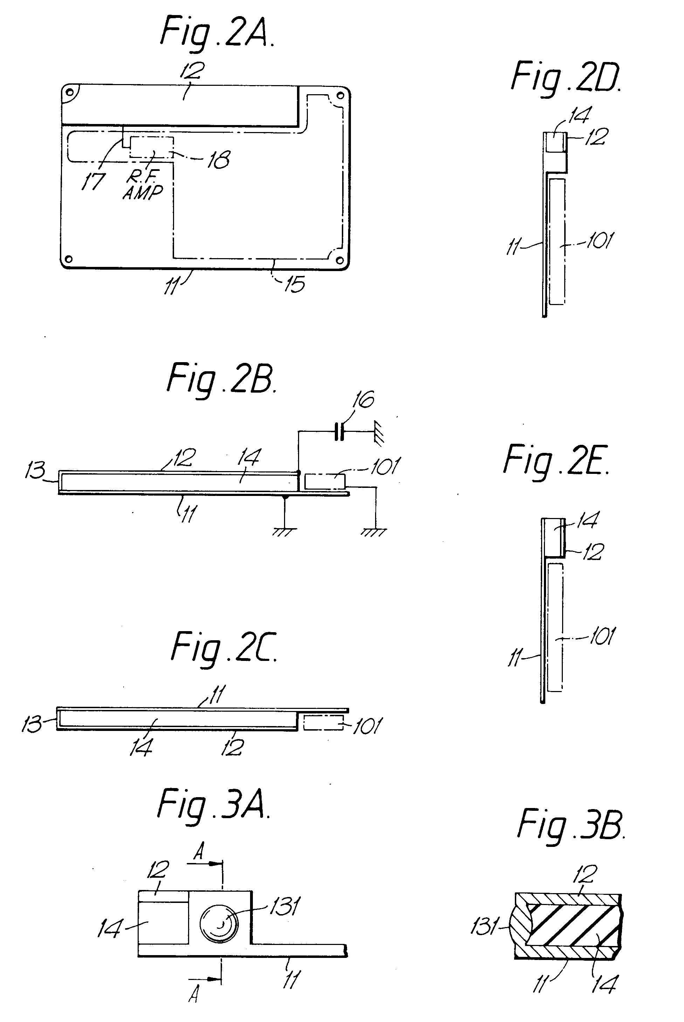

Fig. 2A shows a plan view of the radio receiver from which the cover 10 and battery case 19 are removed for clarity. Figs. 2B to 2E also show the radio receiver as viewed in four different directions, respectively. As schematically shown in Fig. 2B, one end of the conductive plate 12 is connected to a common potential or ground via a capacitor 16. Also connected to the common potential are the metal plate 11 and a circuit 101 which is provided on the printed circuit board 15. The slot antenna constituted by the conductive plate 12, connecting plate 13 and metal plate 11 is tuned to a desired frequency by adequately selecting the capacitance of capacitor 16 and the connection point (feed point) of feeder 17 to the conductive plate 12.

Referring to Fig. 3A, another specific configuration of the connecting plate 13 is shown. Fig. 3B is a section along line A-A of Fig. 3A. While the connecting plate 13 of Figs. 1 and 2 is formed flat, a connecting plate 131 of Figs. 3A and 3B is bulged in its thicknesswise direction. Although the bulge shown in Fig. 3A is circular, it may be oblong depending upon the configuration of the connecting plate 131. The bulged connecting plate 131 and the dielectric 14 serve to provide mechanical strength for preventing the conductive plate 12 from being deformed. This protects the conductive plate 12 against deformation even when an unexpected force is inadvertently applied to the housing of, for example, a paging receiver which is used in close contact with the human body. Further, the dielectric 14 is selected from those materials which have low dielectric constants, i.e., small dielectric losses, so that the resonance frequency may not be noticeably changed despite some possible deformation of the conductive plate 12 and/or the connecting plate 13 or 131.

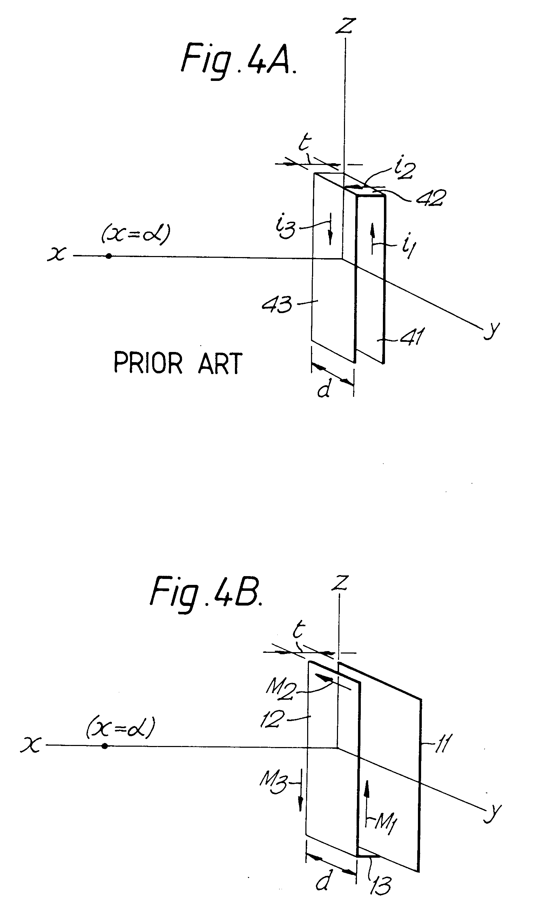

Figs. 4A and 4B are schematic views useful for explaining why the slot antenna in accordance with the present invention is feasible for a thin radio apparatus. Fig. 4A shows a radio receiver having a housing which is partly constituted by a U-shaped loop antenna as disclosed in previously mentioned U.S. Patent 3,736,591. The radiation principle of the loop antenna which is constituted by conductive plates 41 to 43 is based on the electromagnetic fields which are defined by radiation currents i₁, i₂ and i₃ shown in Fig. 4A (the radiation principle is reversible for reception). Specifically, in Fig. 4A, the electromagnetic field at a location x (= α) is obtained by the combination of the electromagnetic field due to the phase difference between the radiation currents i₁ and i₃ and that due to the radiation current i₂. Hence, as the thickness t of the conductive plate 42 is reduced, the currents i₁ and i₃ approach opposite phases and, at the same time, the current i₂ is reduced. Therefore, decreasing the thickness t beyond a certain value would noticeably lower the antenna efficiency to make it impossible to achieve a desired antenna gain. This is why a loop antenna having the above construction is unfeasible for a thin radio receiver.

On the other hand, the radiation principle of the slot antenna in accordance with the present invention which is shown in Fig. 4B is derived from the magnetic fields as defined by magnetic current sources M₁, M₂ and M₃. Specifically, it is only the magnetic field due to the magnetic current source M₂ that reaches the location x = α because those defined by the magnetic current sources M₁ and M₃ which are opposite in phase cancel each other. Therefore, a decrease in thickness t does not affect the substantial antenna efficiency, whereby a desired antenna gain is achievable. For this reason, the antenna of Fig. 4B is optimum when it comes to a thin radio receiver.

In Figs. 4A and 4B, assuming that the antenna width d is 5 millimeters, the thickness t necessary for obtaining an operation gain of -23 dBd at the frequency of 152.24 megahertz is 9.3 millimeters for the loop antenna, Fig. 4A, while only 2.5 millimeters for the slot antenna, Fig. 4B. This proves that the slot antenna is advantageous over the loop antenna in relation to a thin radio receiver. Why the antenna width d is assumed to be 5 millimeters is that the housing of a thin radio receiver has a lateral width of approximately 50 millimeters, and, considering the installation of circuitry in the housing, approximately 10 percent of such a lateral dimension is reasonable. The loop antenna taught by U.S. Patent 3,736,591, like the slot antenna of the present invention, is assumed to be 5 millimeter wide and not loaded with parts thereinside because it is impossible to compare the loop antenna with the slot antenna with the former designed as shown and described. Specifically, if the loop antenna is equal in dimension to the lateral width of the receiver housing, circuit elements installed in the antenna would lower the antenna gain.

In this connection, a radio receiver including a slot antenna with which the operation gain of -23 dBd was achieved in the the frequency band of 150 megahertz is dimensioned as follows. The metal plate 11 is 83.0 millimeter long and 52.0 millimeter wide; the conductive plate 12 is 79.0 millimeter long and 5.0 millimeter wide, and the connecting plate 13 is 4.4 millimeter high.

In the slot antenna constructed in accordance with the present invention, radio circuitry is mounted on part of the metal plate 11 which part does not face the conductive plate 12, which conductive plate constitutes a cavity resonator, while no circuit element is installed in the resonator. This allows a minimum of increase in loss resistance to occur and, thereby, suppresses the decrease in Q value and antenna efficiency to a significant degree. Since the conductive plate 12 is located at the end of and parallel to the metal plate 11 and since the conductive plate 12 is narrower than the metal plate 11, three-dimensional directivity is guaranteed due to the decrease in the directivity gain of a main polarized signal component as well as to the increase in the directivity gain of a cross-polarized signal component.

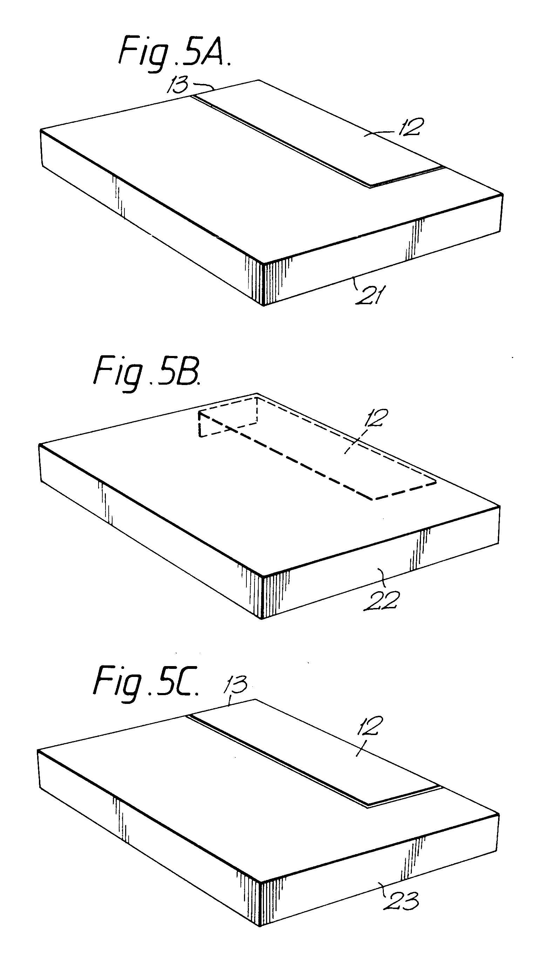

Figs. 5A to 5C each shows another embodiment of the present invention. In Fig. 5A, the conductive plate 12 and the connecting plate 13 are exposed to the outside while the metal plate is concealed by an extremely thin cover 21 which is made of synthetic resin. In Fig. 5B, the slot antenna (metal plate, conductive plate and connecting plate) is fully enclosed by an extremely thin cover 22 which is also made of synthetic resin. Further, in Fig. 5C, all of the metal plate, conductive plate 12 and connecting plate 13 which constitute the slot antenna are exposed to the outside, the other part only being concealed by a cover 23 which is made of resin. While it is obvious that the configuration shown in Fig. 5C is thinnest, it will not feel so pleasant to the user because the metal is exposed.

## Claims

1. A miniature radio receiver including a metal plate (11) constituting a part of the housing of the receiver, a conductive plate (12) facing the metal plate (11), and a connecting plate (13) electrically connecting one end of the conductive plate (12) and one end of the metal plate (11), characterised in that the width of the conductive plate (12) is smaller than the width of the metal plate (11), and in that the receiver further includes circuit components (101) mounted on the metal plate (11) facing the conductive plate (12) on that portion of the metal plate (11) which is not covered by the conductive plate (12), a cover (10) made of an insulating material and fixed to the metal plate (11) while covering the circuit components (101), and a radio frequency circuit (17, 18) coupled to the conductive plate (12), whereby the metal plate (11), the conductive plate (12) and the connecting plate (13) constitute a slot antenna.

2. A miniature radio receiver as claimed in claim 1, further including a dielectric (14) interposed between the conductive plate (12) and the metal plate (11) and having a small dielectric constant.

3. A miniature radio receiver as claimed in claim 1, wherein said connecting plate (13) includes a portion which bulges in its thickness direction.

4. A miniature radio receiver as claimed in claim 1, further including a capacitor (16) which is connected to one end of the conductive plate (12) which is opposite to the one end to which the connecting plate (13) is connected, the capacitor (16) being used for adjusting the operating frequency of the slot antenna.

5. A miniature radio receiver as claimed in claim 1, wherein the cover (10) is fixed to the metal plate (11) by screws (20).

6. A miniature radio receiver as claimed in claim 1, further including a dressing paint which is applied to an outer surface of the metal plate (11).

7. A miniature radio receiver as claimed in claim 1, further including a thin cover made of a synthetic resin (22) which encloses the metal plate (11).

8. A miniature radio receiver as claimed in claim 1, wherein the connecting plate (13) is designed to maintain the mechanical strength of the conductive plate (12).

9. A method of mounting an antenna on a thin miniature receiver, including the steps of locating above a metal plate (11) a conductive plate (12) which faces the metal plate (11), connecting one end of the conductive plate (12) and one end of the metal plate (11) by a conductive connecting plate (13) characterised in that the width of the conductive plate (12) is smaller than the width of the metal plate (11), and in that the method further includes the steps of mounting a circuit part (101) of the receiver on the metal plate (11) facing the conductive plate (12), on that portion of the metal plate (11) which is not covered by the conductive plate (12), and connecting a radio frequency circuit to the conductive plate (12).

10. A method as claimed in claim 9, further including the step of interposing a dielectric (14) having a small dielectric constant between the conductive plate (12) and the metal plate (11).

11. A method as claimed in claim 9, further including the step of providing in the connecting plate (13) a portion which bulges in the thickness direction of the connecting plate (13).

12. A method as claimed in claim 9, further including the step of connecting a capacitor (16) to the other end of the conductive plate (12) to which the connecting plate (13) is not connected, the capacitor (16) being used for tuning the operating frequency of the antenna.

## Patentansprüche

1. Kleinradioempfänger mit einer einen Teil des Empfängergehäuses bildenden Metallplatte (11), einer zu der Metallplatte (11) weisenden Leiterplatte (12) und einer Verbindungsplatte (13), die ein Ende der Leiterplatte (12) und ein Ende der Metallplatte (11) elektrisch verbindet, **dadurch gekennzeichnet,** daß die Breite der Leiterplatte (12) kleiner ist als die Breite der Metallplatte (11) und daß der Empfänger ferner folgende Bestandteile aufweist: Schaltungsbauelemente (101), die auf der Metallplatte (11) angeordnet sind, die der Leiterplatte (12) an dem Teil der Metallplatte (11) zugewandt sind, der nicht durch die Leiterplatte (12) abgedeckt ist, eine Abdeckung (10) aus einem isolierenden Material, die an der Metallplatte (11) befestigt ist und die Schaltungsbauelemente (101) abdeckt, und einen Radiofrequenzschaltkreis (17, 18), der mit der Leiterplatte (12) verbunden ist, wobei die Metallplatte (11) die Leiterplatte und die Verbindungsplatte (13) eine Schlitzantenne bilden.

2. Kleinradioempfänger nach Anspruch 1, ferner mit einem zwischen der Leiterplatte (12) und der Metallplatte (11) angeordneten Dielektrikum (14), das eine kleine Dielektrizitätskonstante aufweist.

3. Kleinradioempfänger nach Anspruch 1, wobei die Verbindungsplatte (13) einen Abschnitt aufweist, der in seiner Dickenrichtung ausgebeult ist.

4. Kleinradioempfänger nach Anspruch 1, ferner mit einem Kondensator (16), der mit einem Ende der Leiterplatte (12) verbunden ist, das dem einen Ende, an dem die Verbindungsplatte (13) befestigt ist, gegenüberliegt, wobei der Kondensator (16) zum Einstellen der Arbeitsfrequenz der Schlitzantenne vorgesehen ist.

5. Kleinradioempfänger nach Anspruch 1, wobei die Abdeckung (10) an der Metallplatte (11) mittels Schrauben (20) befestigt ist.

6. Kleinradioempfänger nach Anspruch 1, ferner mit einer Endbemalung, die auf der Außenfläche der Metallplatte (11) aufgebracht ist.

7. Kleinradioempfänger nach Anspruch 1, ferner mit einer dünnen Abdeckung aus einem Kunstharz (22), die die Metallplatte (11) einschließt.

8. Kleinradioempfänger nach Anspruch 1, wobei die Verbindungsplatte (13) so bemessen ist, daß sie die mechanische Festigkeit der Leiterplatte (12) aufrechterhält.

9. Verfahren zum Befestigen einer Antenne an einem dünnen Kleinempfänger mit den folgenden Schritten: Anordnen einer Leiterplatte (12) oberhalb einer Metallplatte (11), wobei die Leiterplatte zur Metallplatte (11) weist, Verbinden des einen Endes der Leiterplatte (12) mit einem Ende der Metallplatte (11) mittels einer leitenden Verbindungsplatte (13), **dadurch gekennzeichnet,** daß die Breite der Leiterplatte (12) kleiner ist als die Breite der Metallplatte (11) und daß ein Schaltungsteil (101) des Empfängers auf der zur Leiterplatte (12) weisenden Metallplatte (11) an deren Abschnitt befestigt wird, der nicht durch die Leiterplatte (12) abgedeckt ist, und Verbinden eines Radiofrequenzschaltkreises mit der Leiterplatte (12).

10. Verfahren nach Anspruch 9, ferner durch Anordnen eines Dielektrikums (14) mit kleiner Dielektrizitätskonstante zwischen der Leiterplatte (12) und der Metallplatte (11).

11. Verfahren nach Anspruch 9, ferner durch Vorsehen eines Abschnitts in der Verbindungsplatte (13), der sich in Dickenrichtung der Verbindungsplatte (13) ausbeult.

12. Verfahren nach Anspruch 9, ferner durch Verbinden eines Kondensators (16) mit dem anderen Ende der Leiterplatte (12), mit dem die Verbindungsplatte (13) nicht verbunden ist, wobei der Kondensator (16) zum Abstimmen der Betriebsfrequenz der Antenne benutzt wird.

## Revendications

1. Récepteur radio miniaturisé comportant une plaque métallique (11) constituant une partie du boîtier du récepteur, une plaque conductrice (12) faisant face à la plaque métallique (11) et une plaque de connexion (13) connectant électriquement une extrémité de la plaque conductrice (12) et une extrémité de la plaque métallique (11), caractérisé en ce que la largeur de la plaque conductrice (12) est inférieure à la largeur de la plaque métallique (11) et en ce que le récepteur comporte de plus des composants de circuit (101) montés sur la plaque métallique (11) faisant face à la plaque conductrice (12) sur cette partie de la plaque métallique (11) qui n'est pas recouverte par la plaque conductrice (12), un couvercle (10) constitué d'un matériau isolant et fixé à la plaque métallique (11) tout en recouvrant les composants de circuit (101) et un circuit à fréquence radio (17, 18) couplé à la plaque conductrice (12), d'où il résulte que la plaque métallique (11), la plaque conductrice (12) et la plaque de connexion (13) constituent une antenne à fente.

2. Récepteur radio miniaturisé selon la revendication 1, comportant de plus un diélectrique (14) interposé entre la plaque conductrice (12) et la plaque métallique (11) et ayant une constante diélectrique faible.

3. Récepteur radio miniaturisé selon la revendication 1, dans lequel la plaque de connexion (13) comporte une partie qui dépasse dans le sens de son épaisseur.

4. Récepteur radio miniaturisé selon la revendication 1, comportant de plus un condensateur (16) qui est connecté à une extrémité de la plaque conductrice (12) qui est opposée à la première extrémité à laquelle la plaque de connexion (13) est connectée, le condensateur (16) étant utilisé pour ajuster la fréquence d'accord de l'antenne à fente.

5. Récepteur radio miniaturisé selon la revendication 1, dans lequel le couvercle (10) est fixé à la plaque métallique (11) par des vis (20).

6. Récepteur radio miniaturisé selon la revendication 1, comportant de plus une peinture d'apprêt qui est appliquée sur une surface extérieure de la plaque métallique (11).

7. Récepteur radio miniaturisé selon la revendication 1, comportant de plus un couvercle de faible épaisseur constitué de résine synthétique (22) qui entoure la plaque métallique (11).

8. Récepteur radio miniaturisé selon la revendication 1, dans lequel la plaque de connexion (13) est conçue pour maintenir la résistance mécanique de la plaque conductrice (12).

9. Procédé pour monter une antenne sur un récepteur miniaturisé de faible épaisseur, comportant les étapes consistant à placer au-dessus d'une plaque métallique (11) une plaque conductrice (12) qui fait face à la plaque métallique (11), connecter une extrémité de la plaque conductrice (12) et une extrémité de la plaque métallique (11) par une plaque de connexion conductrice (13), caractérisé en ce que la largeur de la plaque conductrice (12) est inférieure à la largeur de la plaque métallique (11) et, en ce que le procédé comporte de plus les étapes consistant à monter une partie de circuit (101) du récepteur sur la plaque métallique (11) faisant face à la plaque conductrice (12) sur cette partie de la plaque métallique (11) qui n'est pas recouverte par la plaque conductrice (12) et à connecter un circuit à fréquence radio à la plaque conductrice (12).

10. Procédé selon la revendication 9, comportant de plus l'étape consistant à placer un diélectrique (14) ayant une constante électrique faible entre la plaque conductrice (12) et la plaque métallique (11).

11. Procédé selon la revendication 9, comportant de plus l'étape consistant à prévoir dans la plaque de connexion (13) une partie qui dépasse dans le sens de l'épaisseur de la plaque de connexion (13).

12. Procédé selon la revendication 9, comportant de plus l'étape consistant à connecter un condensateur (16) à l'autre extrémité de la plaque conductrice (12) à laquelle la plaque de connexion (13) n'est pas connectée, le condensateur (16) étant utilisé pour accorder la fréquence de fonctionnement de l'antenne.
